# EUROPEAN PATENT SPECIFICATION

(11) **EP 1 906 765 B1**
(45) Date of publication and mention of the grant of the patent: **17.03.2010**
(21) Application number: 06762435.3
(22) Date of filing: 04.07.2006
(51) Int. Cl.: A23L 1/24, A23L 1/212, B65D 81/32, B65D 81/22, B65D 77/08

(54) **PACKAGED FOOD PRODUCT**
VERPACKTES LEBENSMITTEL
PRODUIT ALIMENTAIRE EMBALLE

(30) Priority: 28.07.2005 EP 05076737; 28.07.2005 EP 05076738
(43) Date of publication of application: 09.04.2008
(73) Proprietor: Unilever N.V., 3013 AL Rotterdam (NL); Unilever PLC, London EC4Y 0DY (GB)
(72) Inventor: VAN GASTEL, Hubertus, C, NL-3133 AT Vlaardingen (NL)
(74) Representative: Rosen Jacobson, Frans Lucas M.
(86) International application number: PCT/EP2006/006578
(87) International publication number: WO 2007/017024

(56) References cited:
- EP-A- 0 686 354
- EP-A- 0 738 472
- EP-A- 0 979 613
- EP-A2- 1 195 098
- WO-A-93/24024
- WO-A-95/08492
- WO-A-98/33399
- WO-A-03/057592
- WO-A-2004/056673
- JP-B- 7 083 691

## Description

The present invention relates to the field of food products and in particular to the field of packaged food products.

Consumers increasingly seek the convenience of packaged food products such as ready to use salad dressings, sauces, soups and other meal components. Food products like salad dressings may comprise of an aqueous phase, an oil phase and pieces of vegetable, nut, cheese or any other type of food. To ensure that packaged food products are successful a number of requirements need to be met. Ideally, packaged food products need to be storage stable as it usually takes some time for packaged food products to reach the end consumer. After production, packaged food products are usually stored at various points in the supply chain before the food product is actually consumed.

WO 9 833 399 describes a packaged food (soups, sauces, marinades) products comprising solid particles and a liquid phase (oil and aqueous parts). The solid particles are immersed to the oil phase. There is a suspender to separate particles from aqueous phase.

Indeed, the prior art salad dressings prepared industrially that do have relatively long shelf life have been limited to rather frugal compositions comprising merely oil, vinegar, emulsifier and often no salad toppings like chunks of pepper, mushrooms, cheese, nuts etc. If herbs are used, typically 1-5 wt% is used, partly for cosmetic reasons.

In contrast, a typical home-made salad dressing may be prepared by mixing vinegar and olive oil with chunks of pepper, pine seeds and perhaps cheese in a bowl. However, such a food product has a relatively short shelf life of perhaps only one day as the food particles quickly deteriorate in taste and appearance.

Therefore, there is a need to provide a packaged food product with high amounts of vegetables and other foods with an extended shelf life at 20°C.

Surprisingly we have now found it is possible to provide a food product with an extended shelf life and minimal taste migration.

### Summary of the invention

The present invention provides a packaged food product with an extended shelf life whereby the packaged food product comprises a salad dressing in a container whereby
a) the salad dressing comprises a liquid part and a solid part whereby the liquid part comprises an oil phase and an aqueous phase and the solid part comprises food particles and upon standing the liquid part separates into a top layer comprising the oil phase and a base layer comprising the aqueous phase, and
b) the container comprises sides, a bottom face and top face defining at least one single continuous cavity whereby said cavity is divided in a top portion to hold said oil phase and a base portion to hold said aqueous phase and the container further comprises a suspender as specified in claim 1.

According another aspect of the invention a packaged food product is provided with an extended shelf life at 20°C whereby said salad dressing comprises a liquid part and a solid part, whereby the liquid part comprises an oil phase and an aqueous phase and the solid part comprises food particles and upon standing the liquid part separates into a top layer comprising the oil phase and a base layer
whereby the salad dressing comprises
a) less than 25 wt%, preferably less than 20 wt%, more preferably less than 10 wt%, and at least 0.1 wt%, preferably at least 1 wt%, more preferably at least 2 wt% of an aqueous phase;
b) at least 15 wt%, preferably at least 20 wt%, more preferably at least 25 wt% and less than 65 wt%, preferably less than 55 wt%, more preferably less than 10 wt% of an oil phase, and
c) at least 30 wt%, preferably at least 35 wt%, more preferably at least 40 wt% and less than 85 wt%, preferably less than 75 wt%, more preferably less than 65 wt% of food particles, by weight of the total salad dressing;
whereby amounts of aqueous phase, oil phase and food particles are such that at least 10 wt%, preferably at least 30 wt%, more preferably at least 50 wt%, most preferably at least of 70 wt% the food particles by weight of the total amount of the solid part is immersed in the oil phase during the storage and the from 0 to 0.1 wt% of emulsifier.

### Detailed description of the invention

The present invention relates to a packaged salad dressing with an extended shelf life which may be sold in supermarkets or other points of sale. The packaged food product is preferably a salad dressing provided it comprises of a liquid part and a solid part whereby the liquid part comprises of an aqueous phase and an oil phase. The food product is packaged in a container, preferably such that the food product is sealed in an airtight manner. The container may be a tub with a removable lid or a standing flexible pouch also known as a doy pack.

The container comprises sides, a bottom face and top face defining at least one single continuous cavity whereby said cavity is divided in a top portion to hold said oil phase and a base portion to hold said aqueous phase and the container further comprises a suspender connected to the sides, top and/or bottom of the container to keep at least part of the food particles suspended in the oil phase and the suspender comprises at least one opening which is large enough to allow the aqueous phase to be poured out of container.

Since the liquid part of the salad dressing is able to separate into an oil phase and an aqueous phase upon standing, it will be clear to the skilled person that the salad dressing is pourable, i.e. the liquid part has such a low viscosity that the salad dressing can be easily poured out of the container when this is opened. An additional advantage of the inventive packaged salad dressing is that it enables the consumer to shake the container just before opening the container to mix the aqueous and oil phase. The salad dressing preferably contains no or only a small amount of emulsifier and the mixed phases will separate very quickly. Thus, when poured out of the container after shaking the container the oil and aqueous phase of the salad dressing are usually transiently mixed. Yet another advantage of the inventive packaged salad dressing is that although during transport the container comprising the salad dressing may be agitated whereby the liquid phases are mixed transiently, upon standing during storage the liquid phases will quickly separate and at least part of the food particles will be suspended in the oil phase during storage.

Pourable for the present purpose preferably means that the most viscous phase of the liquid part of the salad dressing has a Brookfield viscosity of from 1 to 15000 cps, more preferably from 1 to 6000 cps. If the aqueous phase does not comprise thickeners the most viscous phase will usually be the oil phase. Depending on the oil used and if thickener is used, the amount of thickener used, the aqueous phase may be the most viscous. These viscosities correspond to those of pourable dressings. Brookfield viscosity is a common viscosity parameter and is determined by taking the viscosity after shearing for 1 minute at 10 rpm using a Brookfield DV-I+® viscometer fitted with an RV no. 4 spindle set at 20 degrees Celsius.

When the container is a tub, the top face will usually be a lid which can be removed to open the container for pouring out the food product. When the container is a standing flexible pouch the top face is meant to describe the top part of the pouch where usually the front and back side are sealed together. The top face of the pouch often has a marking to show where the consumer can open the pouch by cutting the pouch open. The opening of the container should obviously be large enough for the food product to exit the container. The container can be resealable.

The bottom portion of the container of the packaged food product according to one aspect of the invention holds the bottom layer comprising the aqueous phase (and any unsuspended food particles, if any) and usually comprises less than 25 v/v%, preferably less than 20 v/v%, more preferably less than 10 vv%, and at least 0.1 v/v%, preferably at least 1 v/v%, more preferably at least 2 v/v% of the volume of the container. The remaining part is the top portion which usually holds top layer comprising the oil phase, the suspended food particles in the oil phase and, optionally any headspace.

One of the advantages of the present invention is that the consumer only has to open one single container to use the product. Other products may comprise different sachets for different components, for example one for a powdered seasoning base and one for a seasoning oil. This requires more packaging material and is more cumbersome as the consumer needs to open more than one container. Another advantage is that the present invention enables a simpler form of processing as only one single container needs to be filled with the food product instead of filing separate containers or separate compartments in one container. Once filled with the food product comprising the liquid and solid part, upon standing, the aqueous phase and oil phase will separate due to gravity whereby the food particles will be suspended in the oil phase.

The packaged food product described herein shows surprisingly little taste migration.

Preferably, the liquid part comprises from 0 to 0.1 wt% of emulsifier. If emulsifier is used, it should be in such amounts that phase separation occurs after standing for 10 to 60 minutes, preferably after standing for 1 to 10 minutes, more preferably after standing 1-9 seconds. Phase separation for the present purpose occurs when the oil phase and aqueous phase are clearly visible as two distinct layers, although the interface between the two layers may comprise a minor amount of an emulsion of aqueous and oil phase. Minor amount in this context is meant to describe an amount of emulsion comprising less than 10 wt% of the oil phase by weight of the total amount of oil phase. It is preferred that the liquid part comprises no emulsifier at all.

The container comprises at least on single continuous cavity to hold the food product, i.e., when the container is opened the complete food product can be poured out of the container comprising the food particles, the oil and the aqueous phase. During production one of the advantages of the present invention is that only one container needs to be filled instead of having to fill separate sachets or different compartments in one tray.

The suspender is formed by a plurality of vertical columns extending from the bottom face of the container whereby the top ends of said columns end in the oil phase layer and the at least one opening between the plurality of vertical columns is large enough to allow the aqueous phase to be poured out of the container but small enough keep the food particles suspended in the oil phase.

The columns may be on any shape, for example tapered towards the top or the bottom end of the column, hollow or solid, thick or thin, as long as the plurality of columns can prevent at least 10 wt% of the food particles by weight of the total amount of the solid part to enter into the aqueous phase reservoir.

Preferably the at least one opening or openings in the suspender is/are large enough to allow the aqueous phase to be poured out of the container but small enough to prevent at least 10 wt%, preferably at least 30 wt%, more preferably at least 50 wt%, most preferably at least of 70 wt% the food particles by weight of the total amount of the solid part to enter into the base layer comprising the aqueous phase.

Preferably, at least one opening or openings in the suspender is/are large enough to allow the aqueous phase to exit the container when poured in less than 10 seconds, preferably less than 5 seconds and preferably in at least 0.01 second.

It will be clear to a skilled person how large the at least one opening or openings in the suspender should be depending on the viscosity of the liquid part and the size of the particles used to achieve above these preferred times or suspension of particles.

The at least one opening may have any form like rectangle, square, circle, triangle etc etc and has circumference of at least 1 mm, preferably at least 1 cm, more preferably at least 4 cm.

Preferably the largest circumference of the food particles for at least 10%, preferably at least 30 wt%, more preferably at least 50 wt%, most preferably at least of 70 wt% of the food particles by weight of the total amount of the solid part is at least 1,01 cm, preferably at least 4,01 cm, more preferably at least 8,01 cm.

The packaging may be made of any food grade material according to processes known in the art. In one preferred embodiment, the packaging is light proof. The packaging may be made from any suitable material such as polyester (PET), metal laminate such as aluminium (la), polyethylene (PE), polypropylene (PP), polyethylene vinyl alcohol copolymer (EVOH). polystyrene, polyvinyl, polyamide and mixtures thereof.

Packaging may be single or multi layer. Especially preferred are flexible containers such as a doy pack or pouches. Preferred combinations of materials for multi layer packaging include: PET/Ia/PE, PET/la/PP, PET/EVOH/PE, PET/EVOH/PP and PET/PP. The suspender may be made using any of the above materials and combinations thereof.

The packaging may be produced according to any suitable method known to the person skilled in the art such as described in W02004012919, WO2901546, WO2004071745, US-A-6 806 338, WO-A-93/01108, US-A-4 769 261, WO2003022708.

The food product may be packaged under oxygen poor or oxygen free atmosphere like nitrogen. In addition, the food product may be pasteurised or sterilised. One of the advantages of the packaged food product according to the invention is an extended shelf life. Extended shelf life for the present purpose is meant to describe a shelf life which is longer than 30 days preferably longer than 60 days, preferably longer than 90 days when stored at 20°C.

Preferably, the total volume of the food product is less than 500 ml, preferably less than 300 ml, more preferably less than 200 ml and at least 20ml, preferably at least 50 ml, more preferably at least 80 ml.

For those embodiments where the food product is a salad dressing the oil phase may comprise any oil suitable for human consumption. When the oil is an olive oil it may be of any grade such as extra virgin or virgin olive oil. Preferably the oil phase comprises an oil selected from olive oil, soy oil, sunflower oil, peanut oil, walnut oil or mixtures thereof.
The aqueous phase preferably comprises an organic acid in such an amount that the pH of the aqueous phase is more than 2.0, preferably more than 3.0, most preferably more than 3.5 and preferably less than 6.0 more preferably less than 5.0, most preferably less than 4.3. Such an organic acid can suitably be chosen from acetic acid (e.g. from vinegar), citric acid, lactic acid or mixtures thereof.

In a particularly preferred embodiment the food product is a salad dressing with a large amount of food particles, whereby the food product comprises
less than 25 wt%, preferab!y less than 20 wt%, more preferably less than 10 wt%, and at least 0.1 wt%, preferably at least 1 wt%, more preferably at least 2 wt% of an aqueous phase;
at least 15 wt%, preferably at least 20 wt%, more preferably at least 25 wt% and less than 65 wt%, preferably less than 55 wt%, more preferably less than 50 wt% of an oil phase, at least 30 wt%, preferably at least 35 wt%, more preferably at least 40 wt% and less than 85 wt%, preferably less than 75 wt%, more preferably less than 65 wt% of food particles, by weight of the total food product.

In a particularly preferred embodiment, the amounts of aqueous phase, oil phase and food particles are such at least 10 wt%, preferably at least 30 wt%, more preferably at least 50 wt%, most preferably at least of 70 wt% the food particles by weight of the total amount of the solid part is immersed in the oil phase during the storage and the from 0 to 0.1 wt% of emulsifier.

The food particles may be derived from any food fit for human consumption and are preferably selected from the group consisting of -either whole or pieces thereof - vegetable, fruit, cheese, nut, seed, meat, fish, flavouring agent and combinations thereof.

Very suitable food particles are selected from the group consisting of -either whole or pieces thereof -pepper, mushroom, tomato, cheese, bacon, pine nuts, sunflower seeds and mixtures thereof.

To impart a specific flavour to the food product herein disclosed it may be preferred that the food product further comprises flavouring agents selected from the group comprising salt, herbs, spices, onions, chopped garlic, garlic oil, or mixtures thereof, in an amount of 0.1-25 wt% based on the total mixture.

### Drawings

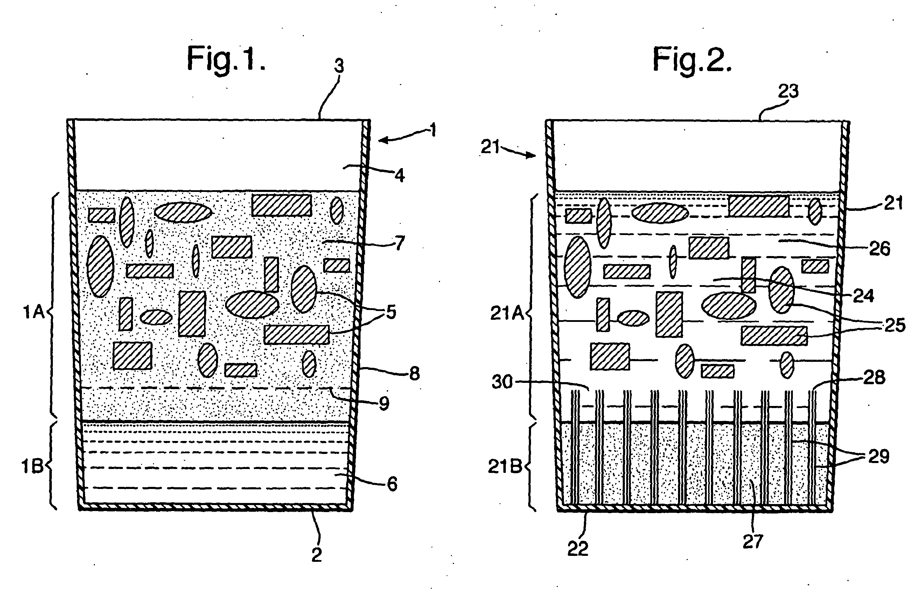

To illustrate the invention, the following figures 1 to 4 show non-limiting embodiments which are particularly preferred.
Figure 1 shows the cross section of a preferred embodiment of the invention whereby the food product is packaged in a tub having sides (1), bottom face (2) and a top face (3) defining a single continuous cavity (4) (lid of the tub is not shown). The food product comprises a liquid part and a solid part whereby the liquid part comprises an oil phase and an aqueous phase and the solid part comprises food particles (5) and upon standing the liquid part separates into a top layer comprising the oil phase (6) and a base layer comprising the aqueous phase (7). The tub comprises a top portion (1A) to hold the oil phase and a base portion (1 B) to hold the aqueous phase and the container further comprises a suspender (8) in the form of a grid connected to the sides (1) to keep at least part of the food particles (5) suspended in the oil phase and the suspender comprises at least one opening (9) which is large enough to allow the aqueous phase to be poured out of the container.
Figure 2 shows the cross section of another preferred embodiment of the invention. Similar to Figure 1, the food product is packaged in a tub having sides (21), bottom face (22) and a top face (23) defining a single continuous cavity (24) (lid of the tub is not shown). The food product comprises a liquid part and a solid part whereby the liquid part comprises an oil phase and an aqueous phase and the solid part comprises food particles (25) and upon standing the liquid part separates into a top layer comprising the oil phase (26) and a base layer comprising the aqueous phase (27). The container comprises a top portion (21 A) to hold the oil phase and a base portion (21 B) to hold the aqueous phase and the container further comprises a suspender (28) is formed by a plurality of vertical columns (29) extending from the bottom face (22) of the container and the top ends of said columns (29) end in the oil phase layer (26) whereby the at least one opening (30) between the plurality of vertical columns is large enough to allow the aqueous phase to be poured out of the container but small enough keep the food particles suspended in the oil phase.

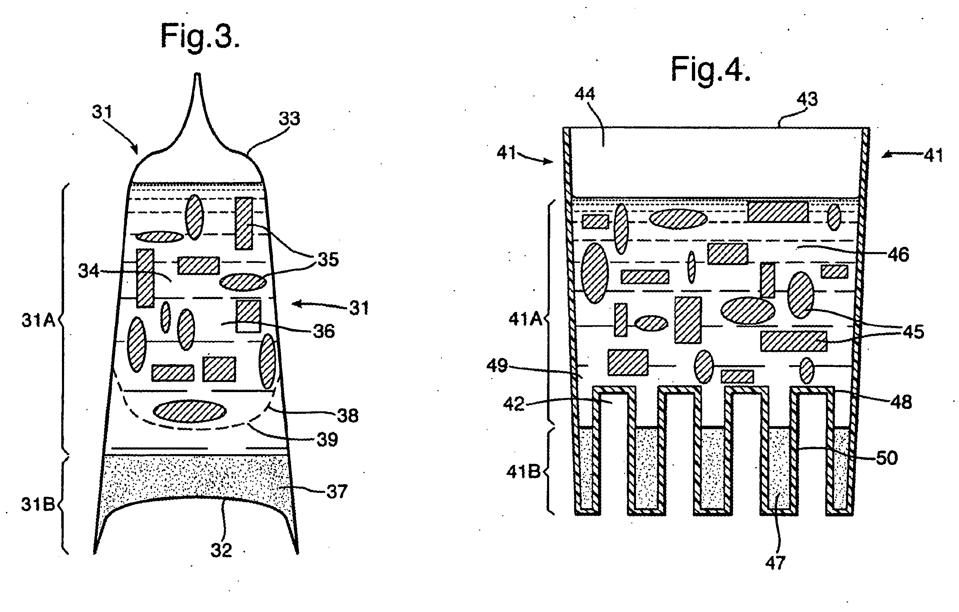

Figure 3 shows the cross section of yet another preferred embodiment of the invention. The food product is packaged in a standing flexible pouch sometimes called a doypack having sides (31), bottom face (32) and a top face (33) defining a single continuous cavity (34). The food product comprises a liquid part and a solid part whereby the liquid part comprises an oil phase and an aqueous phase and the solid part comprises food particles (35) and upon standing the liquid part separates into a top layer comprising the oil phase (36) and a base layer comprising the aqueous phase (37). The doypack comprises a top portion (31 A) to hold the oil phase and a base portion (31 B) to hold the aqueous phase and the container further comprises a suspender (38) in the form of a net connected to the sides (31) to keep at least part of the food particles (35) suspended in the oil phase and the suspender (38) comprises at least one opening (39) which is large enough to allow the aqueous phase to be poured out of the container.
Figure 4 shows the cross section of another preferred embodiment of the invention. Similar to Figure 1, the food product is packaged in a tub having sides (41), bottom face (42) and a top face (43) defining a single continuous cavity (44). The food product comprises a liquid part and a solid part whereby the liquid part comprises an oil phase and an aqueous phase and the solid part comprises food particles (45) and upon standing the liquid part separates into a top layer comprising the oil phase (46) and a base layer comprising the aqueous phase (47). The container comprises a top portion (41 A) to hold the oil phase and a base portion (41B) to hold the aqueous phase and whereby the suspender (48) is formed by one or more recesses (49) in the bottom face (42) of the container and the at least one opening (50) of the one or more recesses is large enough to allow the aqueous phase to be poured out of the container but small enough to keep at least part of the food particles suspended in the oil phase.

### Example 1

A salad dressing according to the invention comprises the ingredients as in the table below.

| **Ingredient** | **Wt%** |
|---|---|
| Food particles (peppers, cheese) | 35 to 65 |
| Oil phase (eg olive oil) | 30 to 60 |
| Aqueous phase (vinegar) | 3 to 8 |
| flavouring agents (herbs, salt etc) | 0.1 to 25 |

The amounts of oil, vinegar and food particles are such that at least 10wt% of the food particles is immersed in the oil phase.

## Claims

1. A packaged food product comprising a salad dressing in a container whereby
a) the salad dressing comprises a liquid part and a solid part whereby the liquid part comprises an oil phase and an aqueous phase and the solid part comprises food particles and upon standing the liquid part separates into a top layer comprising the oil phase and a base layer comprising the aqueous phase, and
b) the container comprises sides, a bottom face and top face defining at least one single continuous cavity whereby said cavity is divided in a top portion to hold said oil phase and a base portion to hold said aqueous phase and the container further comprises a suspender formed by a plurality of vertical columns connected to extending from the bottom face of the container whereby the top ends of said columns end in the oil phase layer and the at least one opening between the plurality of vertical columns is large enough to allow the aqueous phase to be poured out of the container but small enough to keep the food particles suspended in the oil phase.

2. A packaged food product according to claim 1 whereby the at least one opening or openings in the suspender are large enough to allow the aqueous phase to be poured out of the container but small enough to prevent at least 10 wt%, preferably at least 30 wt%, more preferably at least 50 wt%, most preferably at least of 70 wt% the food particles by weight of the total amount of the solid part to enter into the base layer comprising the aqueous phase, whereby the at least one opening has circumference of at least 1 mm, preferably at least 1 cm, more preferably at least 4 cm.

3. A packaged food product according to claim 1 or claim 2 whereby the largest circumference of the food particles for at least 10% of the food particles by weight of the total amount of the solid part is at least 1,01 cm, preferably at least 4,01 cm, more preferably at least 8,01 cm.

4. A packaged food product according to any one of the preceding claims whereby the salad dressing comprises
a) less than 25 wt%, preferably less than 20 wt%, more preferably less than 10 wt%, and at least 0.1 wt%, preferably at least 1 wt%, more preferably at least 2 wt% of an aqueous phase;
b) at least 15 wt%, preferably at least 20 wt%, more preferably at least 25 wt% and less than 65 wt%, preferably less than 55 wt%, more preferably less than 10 wt% of an oil phase, and
c) at least 30 wt%, preferably at least 35 wt%, more preferably at least 40 wt% and less than 85 wt%, preferably less than 75 wt%, more preferably less than 65 wt% of food particles, by weight of the total salad dressing.

5. A packaged food product according to any one of the preceding claims whereby the total volume of the salad dressing is less than 500 ml, preferably less than 300 ml, more preferably less than 200 ml and at least 20ml, preferably at least 50 ml, more preferably at least 80 ml.

6. A packaged food product according to any one of the preceding claims whereby the food particles are selected from the group consisting of - either whole or pieces thereof - pepper, mushroom, tomato, cheese, bacon, pine nuts, sunflower seeds and mixtures thereof.

7. A packaged food product according to any one of the preceding claims whereby the aqueous phase comprises an organic acid in such an amount that the pH of the aqueous phase is more than 2.0, preferably more than 3.0, most preferably more than 3.5 and preferably less than 6.0 more preferably less than 5.0, most preferably less than 4.3.

8. A packaged food product according to any one of the preceding claims whereby the at least one opening in the suspender has a circumference of at least 1 mm, preferably at least 1 cm, such that at least 75wt%, more preferably at least 90 wt% and at the most 100 wt% of the aqueous phase exits container when the product is poured out of the container.

9. A packaged food product according to any one of the preceding claims whereby the at least one opening in the suspender has a circumference of at least 1 mm, preferably at least 1 cm, such that the aqueous phase exits the container when poured in less than 10 seconds, preferably less than 5'seconds and preferably in at least 0.01 second.

## Patentansprüche

1. Verpacktes Lebensmittelprodukt, das ein Salat-Dressing in einem Behälter umfasst, wobei
a) das Salat-Dressing einen flüssigen Teil und einen festen Teil umfasst, wobei der flüssige Teil eine Ölphase und eine wässrige Phase umfasst und der feste Teil Lebensmittelpartikel umfasst, und der flüssige Teil sich beim Stehen in eine obere Schicht, die die Ölphase umfasst, und eine Basisschicht, die die wässrige Phase umfasst, trennt, und
b) der Behälter Seitenwände, einen Boden und eine Oberseite umfasst, die wenigstens einen einzelnen kontinuierlichen Hohlraum definieren, wobei der Hohlraum in einen oberen Teil zur Aufnahme der Ölphase und einen Basisteil zur Aufnahme der wässrigen Phase aufgeteilt ist, und der Behälter einen Suspender umfasst, der durch eine Vielzahl von vertikalen Säulen gebildet wird, die verbunden sind, um sich vom Boden des Behälters zu erstrecken, wodurch die oberen Enden der Säulen in der Ölphasenschicht enden und die wenigstens eine Öffnung zwischen der Vielzahl vertikaler Säulen groß genug ist, um zu erlauben, dass die wässrige Phase aus dem Behälter gegossen wird, aber klein genug ist, um die Lebensmittelpartikel in der Ölphase suspendiert zu halten.

2. Verpacktes Lebensmittel gemäß Anspruch 1, wobei die wenigstens eine Öffnung oder die Öffnungen in dem Suspender groß genug ist/sind, um zu erlauben, dass die wässrige Phase aus dem Behälter gegossen wird, aber klein genug ist/sind, um zu verhindern, dass wenigstens 10 Gewichts-%, vorzugsweise wenigstens 30 Gewichts-%, bevorzugter wenigstens 50 Gewichts-%, am bevorzugtesten wenigstens 70 Gewichts-% der Lebensmittelpartikel, bezogen auf die Gesamtmenge des festen Teils, in die Basisschicht, die die wässrige Phase umfasst, eintreten, wobei die wenigstens eine Öffnung einen Umfang von wenigstens 1 mm, vorzugsweise wenigstens 1 cm, bevorzugter wenigstens 4 cm hat.

3. Verpacktes Lebensmittel gemäß Anspruch 1 oder Anspruch 2, wobei der größte Umfang der Lebensmittelpartikel für wenigstens 10 Gewichts-% der Lebensmittelpartikel, bezogen auf die Gesamtmenge des festen Teils, wenigstens 1,01 cm, vorzugsweise wenigstens 4,01 cm, bevorzugter wenigstens 8,01 cm, ist.

4. Verpacktes Lebensmittel gemäß einem der vorangehenden Ansprüche, wobei das Salat-Dressing
a) weniger als 25 Gewichts-%, vorzugsweise weniger als 20 Gewichts-%, bevorzugter weniger als 10 Gewichts-% und wenigstens 0,1 Gewichts-%, vorzugsweise wenigstens 1 Gewichts-%, bevorzugter wenigstens 2 Gewichts-% einer wässrigen Phase;
b) wenigstens 15 Gewichts-%, vorzugsweise wenigstens 20 Gewichts-%, bevorzugter wenigstens 25 Gewichts-% und weniger als 65 Gewichts-%, vorzugsweise weniger als 55 Gewichts-%, bevorzugter weniger als 10 Gewichts-% einer Ölphase und
c) wenigstens 30 Gewichts-%, vorzugsweise wenigstens 35 Gewichts-%, bevorzugter wenigstens 40 Gewichts-% und weniger als 85 Gewichts-%, vorzugsweise weniger als 75 Gewichts-%, bevorzugter weniger als 65 Gewichts-% Lebensmittelpartikel, bezogen auf das Gewicht des gesamten Salat-Dressings, umfasst.

5. Verpacktes Lebensmittelprodukt gemäß einem der vorangehenden Ansprüche, wobei das Gesamtvolumen des Salat-Dressings weniger als 500 ml, vorzugsweise weniger als 300 ml, bevorzugter weniger als 200 ml und wenigstens 20 ml, vorzugsweise wenigstens 50 ml, bevorzugter wenigstens 80 ml ist.

6. Verpacktes Lebensmittelprodukt gemäß einem der vorangehenden Ansprüche, wobei die Lebensmittelpartikel ausgewählt sind aus der Gruppe, bestehend aus - entweder ganz oder als Stücke davon - Paprika, Pilzen, Tomaten, Käse, Schinken, Pinienkernen, Sonnenblumenkernen und Gemischen davon.

7. Verpacktes Lebensmittelprodukt gemäß einem der vorangehenden Ansprüche, wobei die wässrige Phase eine organische Säure in einer solchen Menge umfasst, dass der pH der wässrigen Phase größer als 2,0, vorzugsweise größer als 3,0, am bevorzugtesten größer als 3,5 und kleiner als 6,0, bevorzugter kleiner als 5,0, am bevorzugtesten kleiner als 4,3 ist.

8. Verpacktes Lebensmittelprodukt gemäß einem der vorangehenden Ansprüche, wobei die wenigstens eine Öffnung in dem Suspender einen Umfang von wenigstens 1 mm, vorzugsweise wenigstens 1 cm hat, so dass wenigstens 75 Gewichts-%, bevorzugter wenigstens 90 Gewichts-% und höchstens 100 Gewichts-% der wässrigen Phase den Behälter verlässt, wenn das Produkt aus dem Behälter gegossen wird.

9. Verpacktes Lebensmittelprodukt gemäß einem der vorangehenden Ansprüche, wobei die wenigstens eine Öffnung in dem Suspender einen Umfang von wenigstens 1 mm, vorzugsweise wenigstens 1 cm hat, so dass die wässrige Phase beim Ausgießen den Behälter in weniger als 10 Sekunden, vorzugsweise weniger als 5 Sekunden und bevorzugter in wenigstens 0,01 Sekunden verlässt.

## Revendications

1. Produit alimentaire conditionné comprenant une sauce pour salade dans un récipient, dans lequel
a) la sauce pour salade comprend une partie liquide et une partie solide, la partie liquide comprenant une phase huileuse et une phase aqueuse et la partie solide comprenant des particules alimentaires et, au repos, la partie liquide se séparant en une couche supérieure comprenant la phase huileuse et une couche inférieure comprenant la phase aqueuse, et
b) le récipient comprend des côtés, une face inférieure et une face supérieure définissant au moins une cavité continue unique, ladite cavité étant divisée en une partie supérieure pour contenir ladite phase huileuse et une partie inférieure pour contenir ladite phase aqueuse, et le récipient comprenant en outre un dispositif à suspension formé par une pluralité de colonnes verticales connectées à et s'étendant à partir de la face inférieure du récipient, les extrémités supérieures desdites colonnes se terminant dans la couche de phase huileuse et l'au moins une ouverture entre la pluralité de colonnes verticales étant suffisamment grande pour permettre à la phase aqueuse d'être versée hors du récipient mais suffisamment petite pour maintenir les particules alimentaires en suspension dans la phase huileuse.

2. Produit alimentaire conditionné selon la revendication 1, dans lequel l'au moins une ouverture ou les ouvertures dans le dispositif à suspension sont suffisamment grandes pour permettre à la phase aqueuse d'être versée hors du récipient mais suffisamment petites pour empêcher au moins 10 % en poids, de préférence au moins 30 % en poids, mieux encore au moins 50 % en poids, tout spécialement au moins 70 % en poids des particules alimentaires, par rapport à la quantité totale de la partie solide, d'entrer dans la couche inférieure comprenant la phase aqueuse, l'au moins une ouverture ayant une circonférence d'au moins 1 mm, de préférence d'au moins 1 cm, mieux encore d'au moins 4 cm.

3. Produit alimentaire conditionné selon la revendication 1 ou la revendication 2, dans lequel la circonférence maximale des particules alimentaires, pour au moins 10 % des particules alimentaires par rapport au poids de la quantité totale de la partie solide, est d'au moins 1,01 cm, de préférence d'au moins 4,01 cm, mieux encore d'au moins 8,01 cm.

4. Produit alimentaire conditionné selon l'une quelconque des revendications précédentes, dans lequel la sauce pour salade comprend
a) moins de 25 % en poids, de préférence moins de 20 % en poids, mieux encore moins de 10 % en poids, et au moins 0,1 % en poids, de préférence au moins 1 % en poids, mieux encore au moins 2 % en poids d'une phase aqueuse ;
b) au moins 15 % en poids, de préférence au moins 20 % en poids, mieux encore au moins 25 % en poids, et moins de 65 % en poids, de préférence moins de 55 % en poids, mieux encore moins de 10 % en poids d'une phase huileuse, et
c) au moins 30 % en poids, de préférence au moins 35 % en poids, mieux encore au moins 40 % en poids, et moins de 85 % en poids, de préférence moins de 75 % en poids, mieux encore moins de 65 % en poids de particules alimentaires, par rapport au poids total de la sauce pour salade.

5. Produit alimentaire conditionné selon l'une quelconque des revendications précédentes, dans lequel le volume total de la sauce pour salade est inférieur à 500 ml, de préférence inférieur à 300 ml, mieux encore inférieur à 200 ml, et d'au moins 20 ml, de préférence d'au moins 50 ml, mieux encore d'au moins 80 ml.

6. Produit alimentaire conditionné selon l'une quelconque des revendications précédentes, dans lequel les particules alimentaires sont choisies dans le groupe constitué par - sous forme entière ou en fragments - le poivre, les champignons, les tomates, le fromage, le bacon, les pignons, les graines de tournesol et leurs mélanges.

7. Produit alimentaire conditionné selon l'une quelconque des revendications précédentes, dans lequel la phase aqueuse comprend un acide organique en une quantité telle que le pH de la phase aqueuse soit supérieur à 2,0, de préférence supérieur à 3,0, tout spécialement supérieur à 3,5, et de préférence inférieur à 6,0, mieux encore inférieur à 5,0, tout spécialement inférieur à 4,3.

8. Produit alimentaire conditionné selon l'une quelconque des revendications précédentes, dans lequel l'au moins une ouverture dans le dispositif à suspension a une circonférence d'au moins 1 mm, de préférence d'au moins 1 cm, de façon qu'au moins 75 % en poids, mieux encore au moins 90 % et surtout 100 % en poids de la phase aqueuse sorte du récipient quand le produit est versé hors du récipient.

9. Produit alimentaire conditionné selon l'une quelconque des revendications précédentes, dans lequel l'au moins une ouverture dans le dispositif à suspension a une circonférence d'au moins 1 mm, de préférence d'au moins 1 cm, de façon que la phase aqueuse sorte du récipient lorsqu'elle est versée en moins de 10 secondes, de préférence moins de 5 secondes et de préférence en au moins 0,01 seconde.
